# FASCICULE DE BREVET EUROPEEN

(11) **EP 0 898 807 B1**
(45) Date de publication et mention de la délivrance du brevet: **19.09.2001**
(21) Numéro de dépôt: 97924087.6
(22) Date de dépôt: 13.05.1997
(51) Int. Cl.: H02K 5/22, H02K 15/00

(54) **ENSEMBLE BOITIER COLLECTEUR ET CONNECTEUR DE MOTOREDUCTEUR**
KOLLEKTORGEHÄUSE-UND MOTORGETRIEBEANSCHLUSSEINHEIT
ASSEMBLY OF A COLLECTING HOUSING AND A REDUCING MOTOR CONNECTOR

(30) Priorité: 13.05.1996 FR 9605923
(43) Date de publication de la demande: 03.03.1999
(73) Titulaire: Meritor Light Vehicle Systems-France, 92082 Paris La Defense 2 (FR)
(72) Inventeur: LAURANDEL, Hervé, F-14000 Caen (FR)
(74) Mandataire: Jacobson, Claude
(86) Numéro de dépôt international: FR9700849
(87) Numéro de publication internationale: WO9743819

(56) Documents cités:
- EP-A- 0 603 083
- WO-A-91/03856
- WO-A-95/08209
- DE-A- 3 838 285
- DE-A- 4 337 390

## Description

La présente invention a pour objet un ensemble boîtier collecteur et connecteur de motoréducteur, notamment pour l'entraînement d'organes de véhicules automobiles tels que des vitres, des toits ouvrants ou des dossiers de sièges d'inclinaison réglable.

Les boîtiers collecteurs fabriqués jusqu'à présent sont constitués de différentes pièces à savoir : un boîtier support en matière plastique, une connexion électrique sur laquelle est soudée la tresse d'un balai, une protection thermique sur laquelle sont soudées une connexion et la tresse de l'autre balai, et enfin deux ressorts de balai montés manuellement à l'aide d'un outillage approprié. Un ensemble boîtier collecteur et connecteur de motoréducteur est décrit dans le document EP-A-603083.

L'ensemble boîtier collecteur et connecteur visé par l'invention est du type dans lequel le boîtier collecteur comporte des connexions électriques mâles adaptées pour s'emboîter dans des connexions électriques femelles du connecteur, ce dernier étant emboîté dans un puits du carter réducteur.

Le boîtier collecteur est adapté pour s'emboîter dans le carter réducteur, les connexions débouchant dans le puits du carter qui reçoit un connecteur fixe, ou un faisceau dont les extrémités sont soudées électriquement aux connexions du boîtier collecteur. L'étanchéité est assurée par une résine époxy.

Dans leur application à l'entraînement d'accessoires de véhicule, les motoréducteurs de ce type sont spécialement destinés aux lève-vitres du type à câble torsadé ou à crémaillère, ayant une structure en X, ou à câble ressort dans une gaine.

Les deux connexions du boîtier collecteur sont habituellement rapportées, ce qui exige une intervention de main d'oeuvre spécifique et implique donc un coût correspondant. De même le montage du connecteur dans le puits et sa soudure entraînent un coût relativement élevé de montage, ainsi que la mise en place manuelle des ressorts de balais.

L'invention a pour but de proposer un boîtier collecteur et un connecteur dont le coût de fabrication soit sensiblement réduit à grâce à des réalisations appropriées des connexions électriques du boîtier collecteur, de la solidarisation du connecteur avec le boîtier collecteur et enfin par un agencement du boîtier collecteur permettant la mise en place automatique des ressorts de balais.

Conformément à l'invention, les connexions mâles sont encliquetées sur des supports en matière plastique, et le connecteur est pourvu de pattes d'encliquetage élastique dans des formes correspondantes ménagées dans les parois du puits du carter réducteur.

Ainsi les deux connexions métalliques du boîtier connecteur sont directement encliquetées sur une matière plastique au lieu d'être rapportées comme précédemment, ce qui simplifie leur fabrication.

De plus la mise en place du connecteur dans le puits par encliquetage mécanique sur le carter réducteur évite avantageusement la soudure onéreuse qui était mise en oeuvre jusqu'à présent.

D'autres particularités et avantages de l'invention apparaîtront au cours de la description qui va suivre, faite en référence aux dessins annexés qui en illustre une forme de réalisation à titre d'exemple non limitatif.

La figure 1 est une vue en perspective éclatée partielle d'un motoréducteur pourvu d'un connecteur selon l'invention.

La figure 2 est une vue en perspective éclatée partielle du motoréducteur montrant son boîtier collecteur et son rotor.

La figure 3 est une vue en plan partielle à échelle agrandie, d'un ressort de balai, de ses rampes de guidage et du balai associé.

La figure 4 est une vue en perspective arrière suivant la direction K du boîtier collecteur de la figure 2.

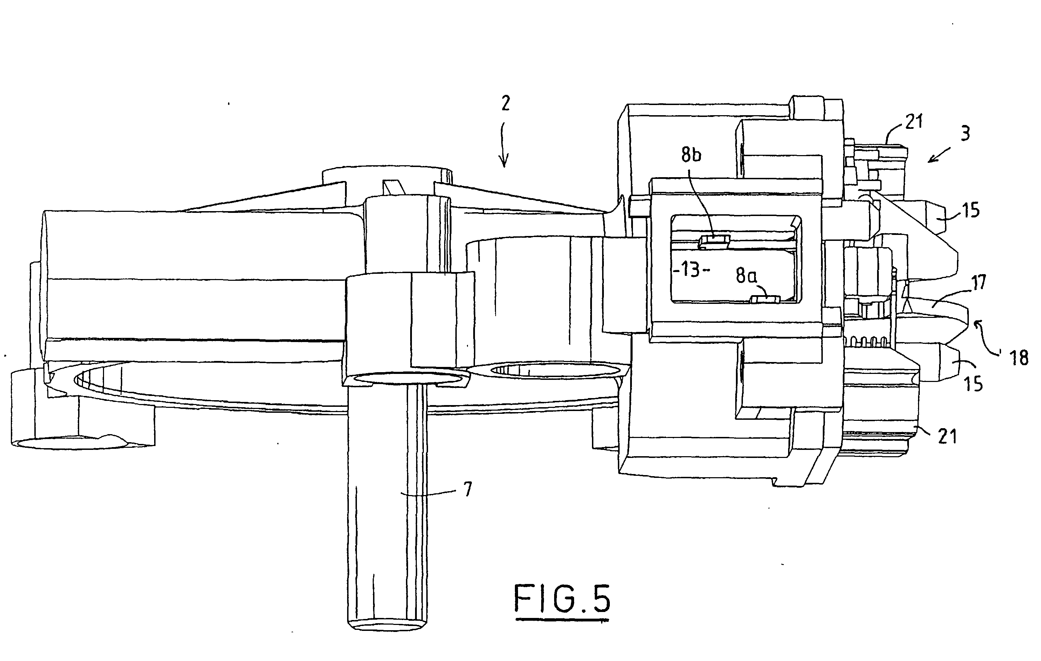

La figure 5 est une vue en perspective partielle du motoréducteur, prise du côté du puits du carter réducteur et montrant les connexions plates du boîtier collecteur engagées dans le puits.

La figure 6 est une vue en élévation latérale d'une variante de réalisation du boîtier collecteur des figures 1 et 2.

La figure 7 est une vue en perspective éclatée du boîtier collecteur de la figure 6.

Le dispositif représenté aux dessins est un motoréducteur destiné notamment à l'entraînement d'accessoires sur des véhicules. Ce motoréducteur comprend un rotor 1, un carter réducteur 2, un boîtier collecteur 3, un connecteur 4 adapté pour pouvoir être solidarisé avec le carter réducteur 2, et des organes de sortie dont une roue dentée 5 et un amortisseur 6. Ces deux dernières pièces sont montées coaxialement à un axe 7 porté par le carter 2. La denture de la roue 5 est en prise avec une vis sans fin 8 de l'arbre 9 du rotor 1 lorsque les pièces du motoréducteur sont assemblées.

Le rotor 1 comporte un empilement de tôles 11 concentriques à l'arbre 9 et un collecteur 20 sur lequel viennent frotter des balais 13, maintenus en appui sur le collecteur 20 par des ressorts respectifs 14.

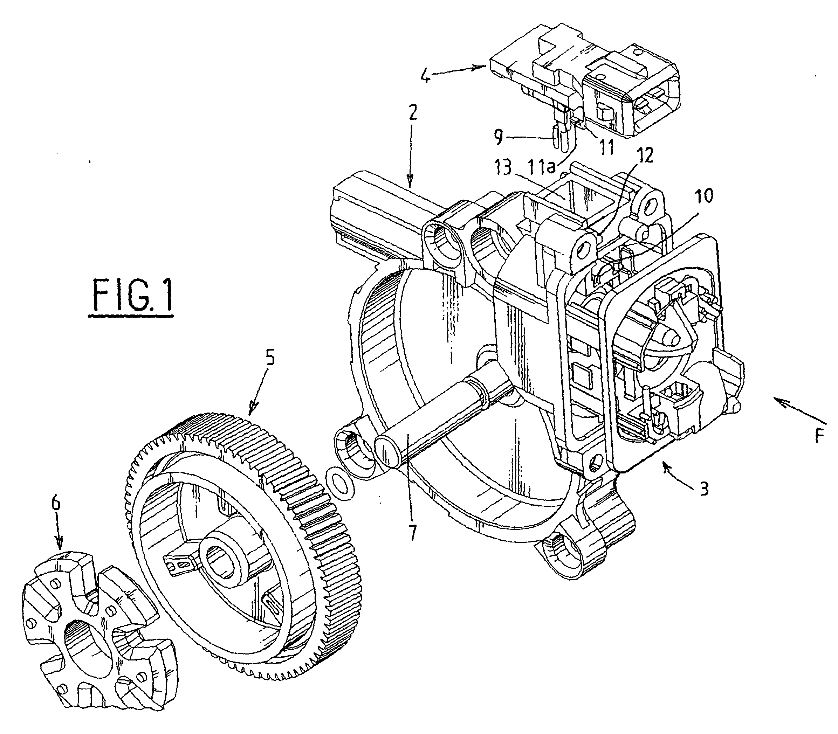

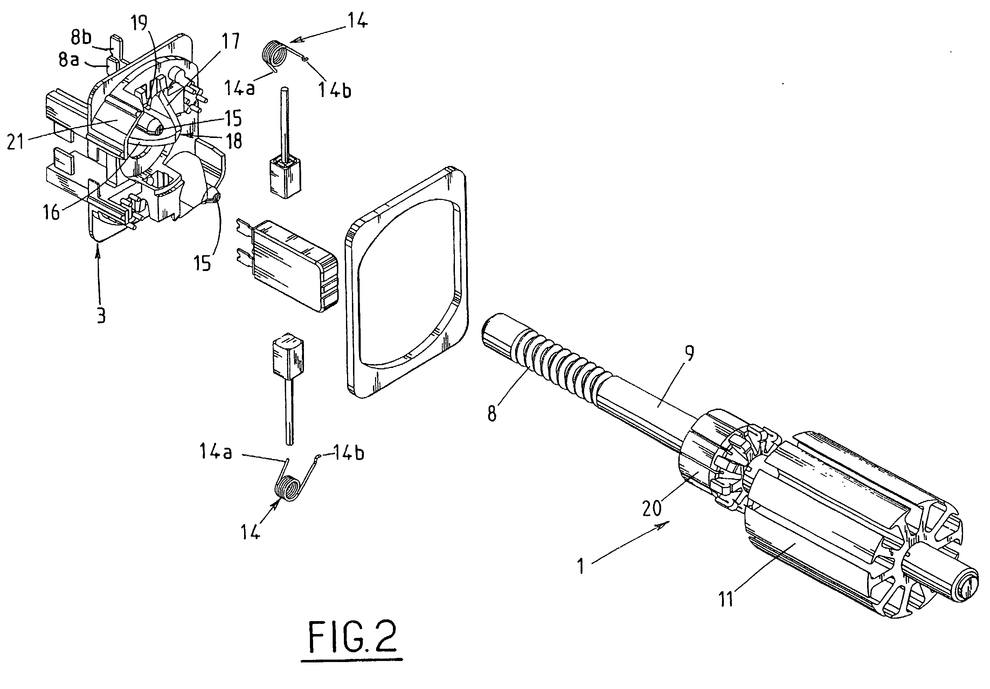

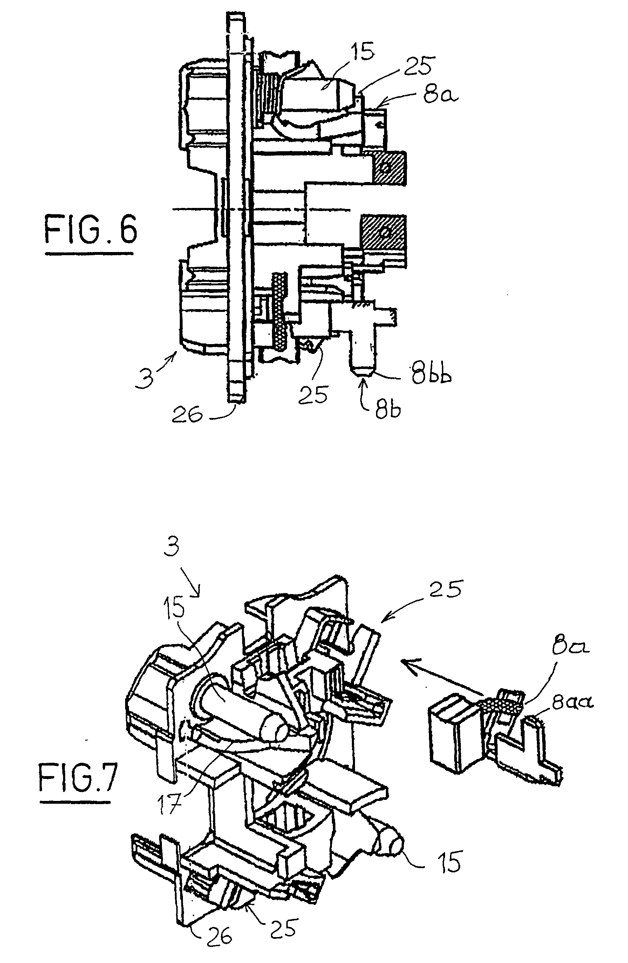

Le boîtier collecteur 3 comporte deux connexions électriques mâles 8a, 8b encliquetées ou montées à force sur des supports 25 en matière plastique, non visibles aux figures 1 et 2, mais illustrés aux figures 6 et 7.

Les connexions 8a, 8b, pourvues d'extrémités biseautées 8aa, 8bb, sont disposées du même côté que des pivots 15, qui seront décrits ci-après, par rapport à un plateau transversal 26. Par contre ces pièces sont disposées de chaque côté du plateau 26 dans la réalisation de la figure 1 et 2. Ces connexions électriques 8a, 8b sont adaptées pour pouvoir venir s'emboîter dans des connexions électriques femelles correspondantes, dont seule la connexion femelle 9 est visible à la figure 1.

Le connecteur 4 est également muni de pattes d'encliquetage élastiques, dont l'une seulement 11 est visible à la figure 1. Ces pattes 1 peuvent venir s'emboîter élastiquement dans des formes correspondantes 12 après que leurs extrémités saillantes 11a aient glissé sur une rampe 12 formée dans un puits 13 du carter réducteur 2. Les bossages terminaux 11a des pattes 11 viennent donc s'insérer élastiquement dans les formes transversales 12 lorsque le connecteur 4 est mis en place sur la carter 2, auquel il est ainsi fixé de manière très simple.

Le boîtier collecteur 3 est équipé de deux ressorts hélicoïdaux 14 présentant chacun deux branches terminales 14a, 14b disposées en épingle, et dont la fonction est de maintenir les balais correspondants 13 en appui sur le collecteur 20. Le boîtier collecteur 3 est également muni de deux pivots 15 s'étendant parallèlement à l'arbre 9, et adaptés pour recevoir chacun un ressort 14, ainsi que de deux rampes inclinées 16, 17.

Ces rampes servent au guidage des branches respectives 14a, 14b du ressort associé 14 après emboîtement et glissement sur le pivot 15 jusqu'à la base de celui-ci, dans la position finale du ressort 14. Les rampes 16, 17 sont ménagées sur un bossage 18 du boîtier collecteur 3, qui s'étend de chaque côté du pivot associé 15 et l'entoure partiellement. A la base des rampes 16, 17 sont agencées des entailles de réception et d'arrêt des branches 14a, 14b du ressort 14 après écartement et guidage de celles-ci sur les rampes respectives 16, 17 par des moyens de montage automatique connus, non représentés.

Sur la figure 2 seule l'entaille 19 formée à la base de la rampe 17 est visible, l'autre entaille étant masquée par un capot latéral 21 de protection.

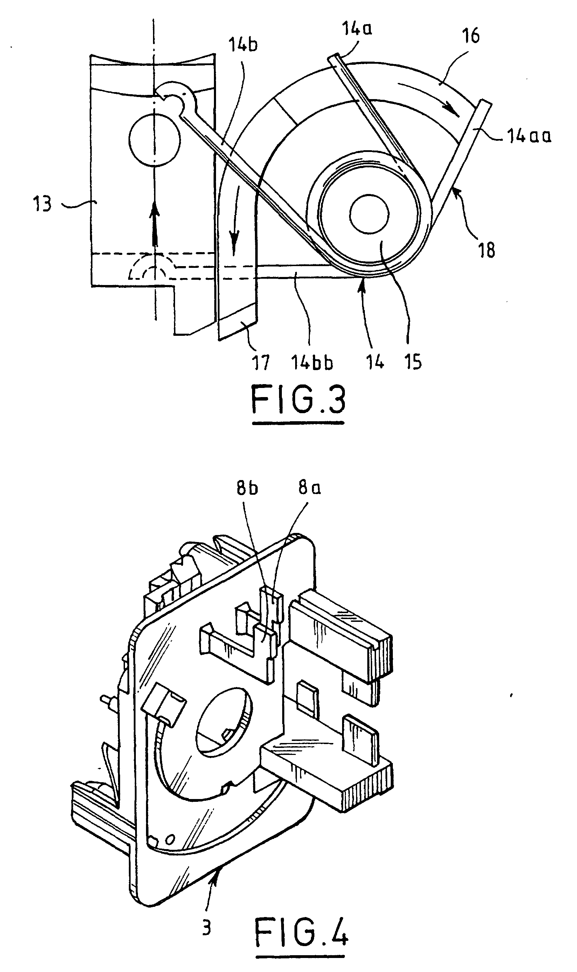

Au début du montage d'un ressort 14, celui-ci est dans la position représentée à la figure 3, sur l'extrémité du pivot 15, ses deux branches terminales 14a, 14b étant rapprochées l'une de l'autre dans la position d'une épingle à cheveu. On fait ensuite coulisser le ressort 14 sur le pivot 15, de sorte que les branches 14a, 14b glissent sur les rampes de guidage respectives 16, 17 et s'écartent, comme indiqué par les flèches portées sur la figure 3, jusqu'à leur position finale 14aa et 14bb.

Dans celle-ci, les branches 14aa et 14bb sont bloquées dans les entailles d'arrêt respectives telles que 19. La branche 14bb a son extrémité qui exerce sur le balai associé 13 une force élastique le maintenant en appui glissant sur le collecteur 12, tandis que l'autre branche 14aa prend appui au pied de la rampe 16.

Le boîtier collecteur 3 vient s'emboîter dans le carter réducteur 2 suivant la direction de la flèche F (figure 1). Les connexions plates 8a, 8b débouchent dans le puits 13 à l'intérieur de deux rainures parallèles 10 pratiquées dans le fond de celui-ci, les deux connexions femelles 9 venant se cliper sur les deux connexions plates 8a, 8b. La tenue du connecteur 4 sur le carter 2 est assurée par l'encliquetage mécanique des pattes 11.

L'invention est susceptible de diverses variantes d'exécution dans le cadre des revendications ci-après.

## Revendications

1. Ensemble boîtier collecteur (3) et connecteur (4) de motoréducteur, notamment pour l'entraînement d'organes de véhicules automobiles, le boîtier collecteur comportant des connexions électriques mâles (8a, 8b) adaptées pour s'emboîter dans des connexions électriques femelles du connecteur, ce dernier étant emboîté dans un puits (13) d'un carter réducteur (2), **caractérisé en ce que** les connexions mâles sont encliquetées sur des supports (25) en matière plastique, et en ce que le connecteur (4) est pourvu de pattes (11) d'encliquetage élastique dans des formes correspondantes (12) ménagées dans les parois du puits du carter réducteur.

2. Ensemble selon la revendication 1 dans lequel le boîtier collecteur (3) est pourvu de ressorts (14) présentant des branches terminales (14a, 14b) sollicitant des balais correspondants (13) en appui sur le collecteur (20), **caractérisé en ce que** ledit boîtier est muni de pivots (15) adaptés pour recevoir chacun un ressort (14), ainsi que de deux rampes inclinées (16, 17) de guidage des branches (14a, 14b) du ressort emboîté sur le pivot, jusqu'à leur position finale, l'une des branches venant solliciter élastiquement le balai tandis que l'autre branche (14b) prend appui au pied de la rampe associée (16).

3. Ensemble selon la revendication 2, **caractérisé en ce que** les deux rampes (16, 17) sont ménagées sur un bossage (18) du boîtier (3) s'étendant de chaque côté du pivot associé (15) et à la base desquelles sont agencées des entailles (19) de réception et d'arrêt des branches (14aa, 14bb) du ressort (14) après emboitement de ce dernier sur le pivot, écartement et guidage des branches sur les rampes (16, 17) respectives par montage automatique.

## Patentansprüche

1. Aufbau aus Kollektorgehäuse (3) und Steckverbinder (4) eines Getriebemotors, insbesondere zum Antrieb von Kraftfahrzeugbestandteilen, wobei das Kollektorgehäuse eindringfähige Stromanschlüsse (8a, 8b) aufweist, die dazu ausgelegt sind, in eindringbare Stromanschlüsse einzudringen, wobei letztgenannte Stromanschlüsse in einem Schacht (13) eines Getriebemotorgehäuses (2) eingesetzt sind, **dadurch gekennzeichnet, dass** die eindringfähigen Stromanschlüsse auf Trager (25) aus Kunststoff eingerastet sind, und dass der Steckverbinder (4) mit Klauen (11) zur elastischen Einrastung in entsprechenden Formen (12) versehen sind, die in den Wänden des Schachts des Getriebemotorgehäuses ausgebildet sind.

2. Aufbau nach Anspruch 1, wobei das Kollektorgehause (3) mit Federn (14) versehen ist, welche endseitige Schenkel (14a, 14b) aufweisen, welche entsprechende Kontakte (13) in Anlage auf dem Kollektor (20) vorspannen, **dadurch gekennzeichnet, dass** das Gehäuse mit Drehzapfen (15) versehen ist, die dazu ausgelegt sind, jeweils eine Feder (14) aufzunehmen, sowie mit zwei geneigt verlaufenden Rampen (16, 17) zur Führung der Schenkel (14a, 14b) der Feder, die auf dem Drehzapfen sitzt, bis in ihre Endstellung einer der Schenkel elastisch den Kontakt vorspannt, bis der andere Schenkel (14b) in Anlage am Fuß der zugeordneten Rampe (16) gelangt.

3. Aufbau nach Anspruch 2, **dadurch gekennzeichnet, dass** die zwei Rampen (16, 17) auf einem Vorsprung (18) des Gehauses (3) gebildet sind, der sich auf jeder Seite des zugeordneten Drehzapfens (15) erstreckt, und an deren Basis Kerben (19) zur Aufnahme und zur Halterung der Schenkel (14aa, 14bb) der Feder (14) ausgebildet sind, nach dem Anbringen derselben auf den Drehzapfen, nach einer Entfernung voneinander und Führung der Schenkel auf den Rampen (16, 17) mittels automatischer Montage.

## Claims

1. A collector housing (3) and motor reduction unit connector (4) assembly, particularly for operating motor vehicle units, the collector housing comprising male electrical connections (8a, 8b) which can be inserted into female electrical connections in the connector, the latter being inserted into a well (13) of a reduction unit housing (2), **characterised by** the fact that the male connections are snapped onto plastic supports (25), and by the fact that the connector (4) has flexible snap tabs in corresponding shapes (12) arranged in the walls of the well of the reduction unit housing.

2. An assembly according to Claim 1 in which the collector housing (3) is provided with springs (14) which have end arms (14a, 14b) acting on corresponding brushes (13) supported on the collector (20), **characterised by** the fact that the said housing has pivots (15), each suitable for taking a spring (14), as well as two inclined tracks (16, 17) for guiding the arms (14a, 14b) of the spring fitted onto the pivot up to their final position, one of the arms acting flexibly on the brush while the other arm (14b) rests at the bottom of the associated inclined track (16).

3. An assembly according to Claim 2, **characterised by** the fact that the two inclined tracks (16, 17) are arranged on a boss (18) of the housing (3) extending on each side of the associated pivot (15), and at the base of which notches (19) are arranged to take and stop the arms (14aa, 14bb) of the spring (14) after fitting the latter onto the pivot, spacing and guiding the arms on the respective inclined tracks (16, 17) by automatic assembly.
